# DEMANDE DE BREVET EUROPEEN

(11) **EP 4 631 855 A1**
(43) Date de publication de la demande: **15.10.2025**
(21) Numéro de dépôt: 25168477.5
(22) Date de dépôt: 04.04.2025
(51) Int. Cl.: B64D 11/00, B64D 11/06

(54) **SÉPARATEUR À RIDEAU DE PLEINE HAUTEUR ENTRE SUITES PASSAGERS D'UNE CABINE D'AVION**

(30) Priorité: 08.04.2024 FR 2403612
(71) Demandeur: Airbus Atlantic, 17300 Rochefort (FR)
(72) Inventeur: PLISSONEAU, Silvère, 17138 PUILBOREAU (FR); MOQUETTE, Jean-Philippe, 17300 ROCHEFORT (FR); PINEAU, Jean-Luc, 17300 ROCHEFORT (FR); COLLINS, Mark, 1239 COLLEX-BOSSY (CH); COLLINS, Alexandra, 1239 COLLEX-BOSSY (CH); BRUYERE, Jean-Baptiste, 1239 COLLEX-BOSSY (CH); CHARDIN, Christophe, 95747 ROISSY CHARLES DE GAULLE (FR)
(74) Mandataire: Ipside

(57) **Abrégé**

Séparateur (100) de cabine d'avion (200), pour séparer deux zones passagers privatives (210, 220) adjacentes dans une première classe, comportant un rideau (10) suspendu par son côté supérieur (12) à une tringle supérieure (20), ledit séparateur présentant une position ouverte et une position fermée, et étant de pleine hauteur, couvrant ainsi une hauteur jusqu'au plafond de la cabine d'avion dans laquelle il est installé, et accroché par son côté inférieur (13) à une tringle inférieure (30) opposée à la tringle supérieure, ladite tringle inférieure étant configurée pour permettre au rideau de se détacher par le bas en cas de dépressurisation.

## Description

### DOMAINE TECHNIQUE

La présente invention appartient au domaine des ensembles et systèmes de séparation dans les cabines d'avions, notamment les séparateurs entre suites passagers (plus connus en anglais sous le nom « *dividers* »), et concerne plus particulièrement un séparateur à rideau de pleine hauteur (*full height*), c'est-à-dire couvrant toute la hauteur de la cabine, du plancher au plafond.

L'invention trouve une application directe, mais non exclusive, dans l'aménagement de cabines première classe (*first class*) d'avions de ligne.

### ÉTAT DE L'ART

Le niveau de confort exigé dans les classes supérieures (classe affaires et première classe) d'avions de ligne doit pouvoir offrir aux passagers une grande d'intimité lors du voyage. Les compagnies aériennes utilisent pour ce faire des séparateurs qui peuvent être installés entre classes ou entre différentes zones passagers. Ces séparateurs, ou diviseurs d'espace, sont connus depuis longtemps et existent sous de nombreuses conceptions pour assurer différentes fonctions.

En particulier, les séparateurs de suites passagers sont bien connus dans les avions. Ils sont notamment utilisés pour diviser les places assises en première classe.

Ces séparateurs définissent une paroi occultante entre des zones de sièges adjacentes, afin de les séparer visuellement et assurer ainsi l'intimité des passagers qui les occupent.

Les séparateurs sont souvent constitués de panneaux et présentent donc des structures rigides. Ils peuvent être fixes ou déployables à la guise du passager. Dans ce deuxième cas, les séparateurs peuvent comprendre différents moyens de déploiement, manuels ou automatiques, tels que des rails de coulissement, des charnières de pivotement, des voies de guidage (sous forme de tiroir par exemple), etc.

Le document US2020262562 décrit par exemple différentes cloisons de séparation entre deux sièges passagers dont une première cloison de séparation qui se range dans un meuble et se déploie le long d'une voie de guidage en dehors du meuble, dans une direction des premier et second sièges passagers pour diviser une première partie de la zone de places assises.

Ces solutions présentent généralement une faible hauteur, ne garantissant donc qu'une intimité relative lorsque les passagers sont assis. De plus, en raison de leurs matériaux de fabrication, ces mêmes séparateurs réalisés en plus grande hauteur induiraient une augmentation considérable de leur masse, ce qui n'est pas souhaitable dans le domaine du transport aérien.

D'un autre côté, des séparateurs rigides de pleine hauteur pourraient constituer un grand risque sécuritaire en cas de dépressurisation rapide de la cabine. En effet, une décompression rapide pulvériserait le séparateur rigide, qui ne laisserait pas passer l'air, en plusieurs morceaux éjectés, pouvant grièvement blesser des passagers. Ce type de conception a donc très peu de chances de passer les tests de qualification et de certification applicables.

Il existe cependant des séparateurs comprenant un rideau souple en matière textile par exemple. Le rideau permet efficacement de créer une barrière d'intimité, sans entraver la circulation entre les zones de sièges.

Ces séparateurs à rideau sont installés entres les classes et non entre les suites passagers d'une même classe. Les documents EP3365229 et US2014158310 décrivent de tels séparateurs.

De plus, lorsque l'intimité n'est pas une priorité, ces rideaux sont tirés vers le côté où ils sont repliés ou disposés en accordéon.

Certaines compagnies aériennes investissent du temps, de l'argent et des efforts dans la conception esthétique de leurs cabines, espérant ainsi attirer davantage de passagers. Par exemple, elles optent parfois pour un design moderne ou minimaliste. Cependant, des rideaux qui pendent sur un côté, peuvent avoir un effet contraire en donnant à la cabine un aspect désordonné et encombré, compromettant ainsi l'expérience des passagers.

Il est donc important que ce type de séparateurs présente une allure harmonieuse, aussi bien en position fermée qu'en position de stockage sur le côté, par exemple en ayant des ondulations régulières et maitrisées.

### PRÉSENTATION DE L'INVENTION

La présente invention vise à pallier tout ou partie des inconvénients de l'art antérieur exposés ci-avant, en proposant une solution de séparation entre suites passagers en première classe qui offre une inimité maximale en couvrant toute la hauteur de la cabine et qui respecte les exigences de sécurité en cas de décompression rapide. À cet effet, la présente invention a pour objet un séparateur de cabine d'avion, destiné à séparer deux zones passagers privatives adjacentes dans une même classe, comportant un rideau suspendu par son côté supérieur à une tringle supérieure, ledit séparateur présentant une position ouverte et une position fermée. Ce séparateur est remarquable en ce qu'il est de pleine hauteur, couvrant ainsi une hauteur jusqu'au plafond de la cabine d'avion dans laquelle il est installé, et en ce qu'il est accroché par son côté inférieur à une tringle inférieure opposée à la tringle supérieure.

En étant de pleine hauteur, ce séparateur offre une occultation visuelle complète entre les zones passagers adjacentes. Cela permet aux passagers de se sentir plus isolés et protégés des regards indésirables, améliorant ainsi leur sentiment d'intimité pendant le vol.

La configuration avec deux tringles offre un avantage cinématique en permettant un mouvement synchronisé entre le haut et le bas du rideau. Cette synchronisation permet une manipulation fluide et coordonnée du rideau, créant ainsi une sensation d'harmonie dans la cabine.

En outre, l'utilisation d'une tringle supérieure et d'une tringle inférieure pour soutenir le rideau offre un avantage esthétique en maintenant des ondulations régulières et maitrisées. Cette conception contribue ainsi à une ambiance générale de confort et de sophistication.

Il est important de noter que le séparateur de l'invention sépare deux zones passagers privatives dans une même classe, contrairement aux solutions antérieures qui sont exclusivement utilisées pour séparer entre les différentes classes.

La notion de classe est ici utilisée telle qu'elle est codifiée par l'Association du transport aérien international (IATA).

Selon un mode de réalisation, le rideau comporte une première partie et une deuxième partie séparées, lesdites parties étant configurées pour que leurs mouvements soient synchronisés et se rejoignant au niveau d'une ligne de fermeture centrale lorsque ledit séparateur est en position fermée.

Cette conception en des deux parties du rideau assure que le rideau se referme de manière équilibrée et esthétique, sans laisser d'espace ou de lacune au centre.

Selon un mode de réalisation, chaque tringle, supérieure ou inférieure, comporte un rail de coulissement et des glisseurs reliant physiquement le rideau au rail de coulissement, chaque glisseur comportant un patin de glissement sur le rail et un crochet pour accrocher le rideau.

De façon particulièrement avantageuse, les glisseurs de chaque tringle sont reliés par une cordelette comportant des stoppeurs placés à intervalles réguliers, pour maintenir des ondulations régulières du rideau.

Selon un aspect de l'invention, le séparateur comporte un système d'entrainement motorisé pour actionner automatiquement les mouvements d'ouverture et de fermeture dudit séparateur, ledit système étant couplé de façon synchronisée à la fois à une partie haute et à une partie basse du rideau.

Plus particulièrement, au moins un côté latéral proximal du rideau est couplé au système d'entrainement motorisé au moyen de deux organes de liaison : un en partie haute et l'autre en partie basse.

Ainsi, selon la conception du rideau en deux parties, le couplage avec le système d'entrainement motorisé se fait en quatre points : deux points hauts et deux points bas à proximité des sommets du rideau.

Selon un aspect particulièrement avantageux de l'invention, la tringle inférieure est configurée pour permettre au rideau de se détacher par le bas en cas de décompression rapide, lorsque ledit séparateur est en position fermée dans une cabine d'avion.

Par exemple, la tringle inférieure comporte des glisseurs inférieurs pour attacher le côté inférieur du rideau, et chaque glisseur inférieur comporte un crochet qui se détache du rideau au-delà d'une charge de traction maximale, afin de libérer le rideau en cas de décompression rapide de la cabine.

Selon un mode de réalisation, le rideau est totalement dissimulé dans un espace de stockage réduit lorsque le séparateur est en position ouverte.

La présente invention a également pour objet une cabine d'avion comprenant deux suites privatives adjacentes, notamment en première classe, et comportant un séparateur tel que présenté, installé entre lesdites suites.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un séparateur de suites passagers, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : une vue en perspective d'un séparateur entre deux suites passagers, selon un mode de réalisation de l'invention ;
- Figure 2a : une vue en perspective du séparateur isolé en position fermée ;
- Figure 2b : une vue en perspective du séparateur isolé en position ouverte, avec le rideau stocké latéralement dans des espaces réduits ;
- Figure 3a : une vue de face du séparateur en position fermée ;
- Figure 3b : une vue de face du séparateur en position ouverte ;
- Figure 4 : les groupes supérieur et inférieur des glisseurs isolés, reliés par des cordelettes ;
- Figure 5 : les glisseurs supérieurs avec une vue de détail sur les glisseurs supérieurs d'entrainement ;
- Figure 6 : la structure de base des glisseurs supérieurs ;
- Figure 7 : un glisseur supérieur avec son crochet accrochant un élément annulaire du rideau ;
- Figure 8 : l'anneau supportant le crochet dans un glisseur ;
- Figure 9 : un glisseur supérieur positionné sur le rail de coulissement, avec un détail sur la paire de stoppeurs associée ;
- Figure 10 : une vue partielle montrant un glisseur supérieur d'entrainement ;
- Figure 11 : une autre vue partielle montrant le glisseur supérieur d'entrainement selon un angle différent ;
- Figure 12 : les glisseurs inférieurs avec une vue de détail sur les glisseurs inférieurs d'entrainement ;
- Figure 13 : la structure de base des glisseurs inférieurs ;
- Figure 14 : une vue partielle montrant un glisseur inférieur d'entrainement.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un séparateur de cabine d'avion, principalement destiné à être agencé entre des suites passagers en première classe. Cet exemple, non limitatif, est donné pour une meilleure compréhension de l'invention et n'exclut pas l'utilisation du séparateur dans d'autres classes, voire dans d'autres véhicules adaptés de transport de passagers.

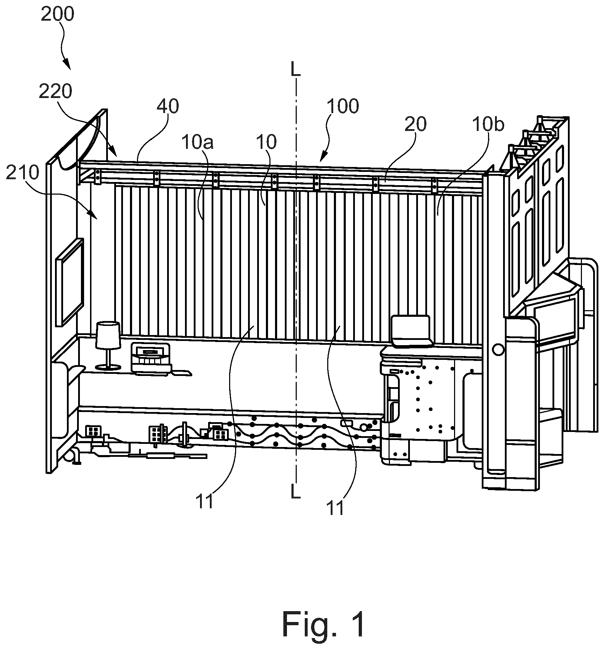

Dans le présent document, le terme « séparateur » désigne un ensemble de séparation d'espace utilisé à l'intérieur d'une cabine d'avion ou similaire pour séparer différentes zones passagers, en particulier des zones privatives telles que les suites passagers en première classe. Le séparateur est plus connu dans le jargon sous son nom anglais « *divider* »*.* Le terme « suite passager » désigne quant à lui un espace privatif au sein de la cabine, généralement en première classe, comprenant un fauteuil convertible en lit pour recevoir confortablement un passager, et pouvant inclure des aménagements spécifiques tels que des rangements, des éléments de commodité et des facilités de divertissement à destination du passager. La figure 1 représente un séparateur 100 de cabine d'avion, une partie de ladite cabine étant désignée par la référence 200 sur la figure, ledit séparateur étant installé entre deux suites passagers adjacentes 210 et 220. De telles suites adjacentes sont généralement situées dans une partie centrale de la cabine en première classe.

Pour une meilleure visibilité du séparateur 100 dans son environnement, et une meilleure compréhension de son agencement, une majeure partie des éléments de la suite passager, dont le fauteuil, n'est pas représentée.

Le séparateur 100 est de pleine hauteur, c'est-à dire qu'il couvre toute la hauteur utile de la cabine. Autrement dit, dans une configuration finale de l'aménagement de la cabine 200, le séparateur 100 couvre toute la hauteur accessible au passager, jusqu'au plafond (*ceiling*)*.* Ainsi, sur la figure 1, les parties qui apparaissent dépasser le séparateur 100 seront garnies d'éléments de plafond en sorte que ledit séparateur occupe toute la hauteur accessible au passager dans l'aménagement final de la cabine.

Selon l'exemple de réalisation illustré, le séparateur 100 couvre toute la hauteur disponible entre une crédence séparant les deux suites passager et le plafond de la cabine.

Le séparateur 100 présente par exemple une hauteur de 3m.

De ce fait, le séparateur 100 permet de totalement séparer les espaces des suites adjacentes 210 et 220.

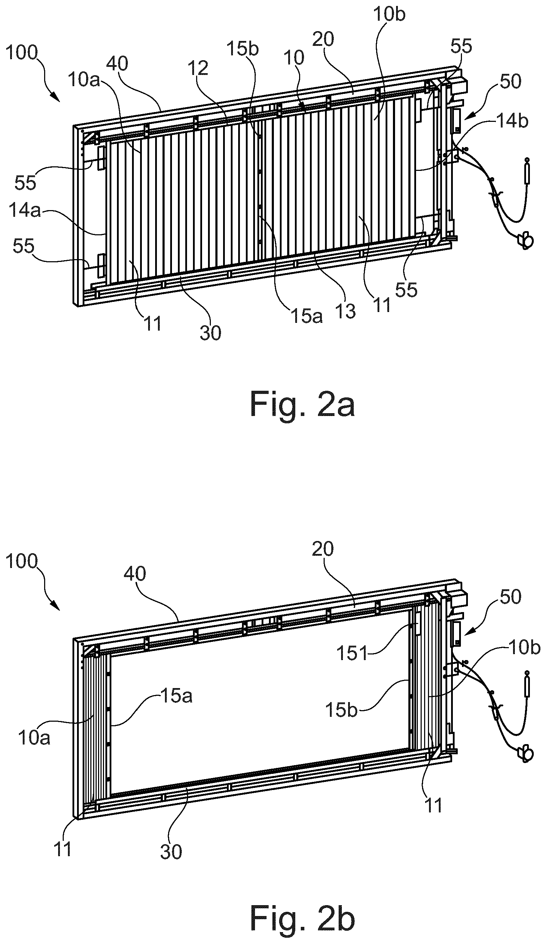

Les figures 2a et 2b représentent le séparateur 100, seul, dans une position fermée et dans une position ouverte respectivement.

Le séparateur 100 comporte un rideau 10, une tringle supérieure 20 à laquelle le rideau est suspendu par son côté supérieur, une tringle inférieure 30 opposée à la tringle supérieure et à laquelle le rideau est accroché par son côté inférieur, un cadre 40 permettant de fixer le séparateur par sa partie haute à la cabine, et un système d'entrainement motorisé 50 avec un entrainement à la fois par le haut et par le bas du rideau 10.

Le rideau 10, selon l'exemple de réalisation illustré, est constitué de deux parties séparées : une première partie 10a et une deuxième partie 10b. Les deux parties du rideau 10 ont des mouvements opposées et se rejoignent au niveau d'une ligne de fermeture centrale L lorsque le séparateur 100 est en position fermée comme représenté sur la figure 1.

Le rideau 10 présente un côté supérieur 12 par lequel il est suspendu à la tringle supérieure 20, un côté inférieur 13 par lequel il est accroché à la tringle inférieure 30, un premier côté latéral proximal 14a et un deuxième côté latéral proximal 14b par lesquels le rideau 10 est couplé au système d'entrainement motorisé 50 en quatre points matérialisés par les organes de liaison 55.

Comme représenté sur la figure 2a, les organes de liaison 55 sont répartis deux à deux entre le haut et le bas du rideau 10, chacun desdits organes étant attaché à proximité d'un sommet du rideau 10 qui présente une forme rectangulaire.

Le rideau 10 présente également un premier côté latéral distal 15a et un deuxième côté latéral distal 15b, opposés aux côtés latéraux proximaux 14a et 14b, qui se rejoignent en position fermée au niveau de la ligne de jonction L.

Les côtés latéraux distaux 15a et 15b comportent chacun une doublure apportant une raideur à la structure du rideau 10 surtout lors de son mouvement de fermeture, et peuvent également comporter des jeux d'aimants 151 pour assurer une fermeture facile qui se maintient de façon sécurisée et limite ainsi les fuites de lumière au niveau de la ligne de fermeture.

Le rideau 10 définit des ondulations 11 avec un pas régulier pour un meilleur agrément esthétique, aussi bien en position fermé qu'en position ouverte.

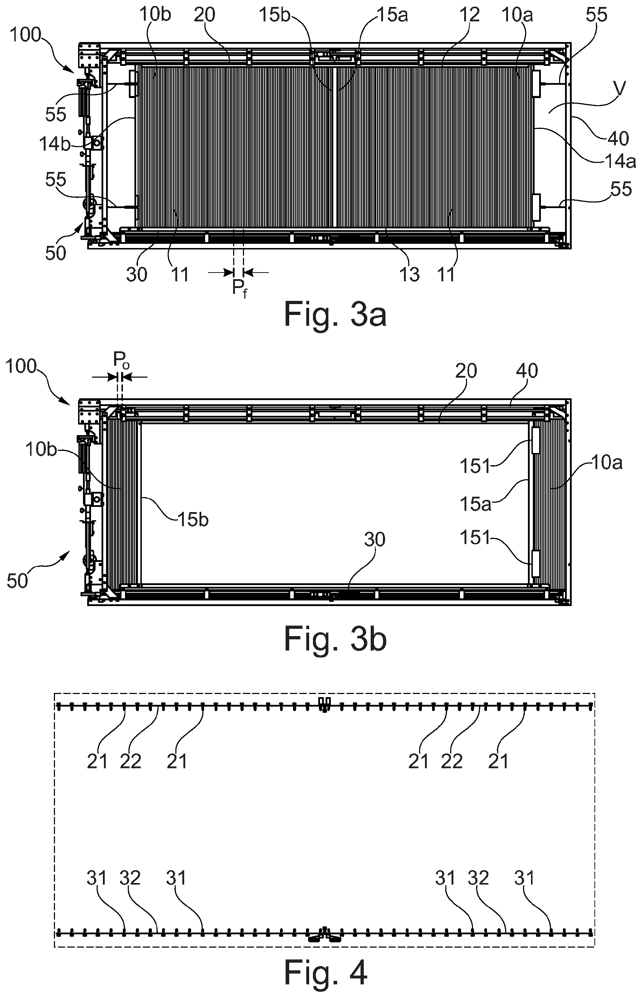

Les figures 3a et 3b représentent, en vue de face, respectivement la position fermée et la position ouverte du séparateur 100 et permettent de visualiser la régularité du pas des ondulations 11 du rideau 10.

En effet, le rideau 10 définit des ondulations 11 avec un pas régulier : P_{f} en position fermée et Pₒ en position ouverte du séparateur 100.

Selon un mode de réalisation, le rideau 10 est fabriqué dans une matière textile opacifiante et suffisamment souple pour assurer la régularité du pas des ondulations 11 dans les deux positions du séparateur 100.

Le rideau 10 comprend par exemple dans sa structure interne une membrane spécifique qui permet d'assurer la fonction d'opacité.

Il convient de noter que selon son épaisseur, sa souplesse et son orientation de trame, le tissu choisi pour le rideau 10 peut avoir un comportement différent. Il a donc fallu choisir un tissu avec une combinaison avantageuse de ces paramètres pour assurer à la fois l'opacité totale pour occulter tout passage de lumière entre les deux suites séparées, une ondulation régulière pour un meilleur agrément esthétique, et un encombrement moindre lorsque le rideau 10 est stocké sur les côtés en position ouverte.

Par exemple, le rideau 10 peut être fabriqué dans un tissu souple sur lequel les ondulations produisent des plis de style « loft ».

Concernant le stockage à moindre encombrement, le rideau 10 se plie lors de son retrait vers les côtés latéraux du cadre 40, et provoque un tassement des ondulations 11 qui se plaquent les unes contre les autres. Il est donc crucial que ce tassement se fasse de façon ordonné en maintenant un pas sensiblement régulier afin de minimiser l'espace nécessaire au stockage.

La figure 3b illustre la largeur réduite de l'espace nécessaire au stockage du rideau 10 lorsque le séparateur 100 est complètement ouvert.

En outre, les figures 3a et 3b montrent que l'espace nécessaire au stockage du rideau 10 correspond au vide V, laissé entre le rideau 10 déployé et le cadre 40 visible sur la figure 3a. De ce fait, des coffres ou caissons (non représentés) peuvent être prévus à ces endroits pour recevoir le rideau 10 en position stockée et le dissimuler lorsque le séparateur 100 est ouvert, améliorant ainsi l'expérience passager.

Le rideau 10 est accroché par ses côtés supérieur 12 et inférieur 13 aux tringles supérieure 20 et inférieure 30.

Les tringles 12 et 13 comprennent des rails de coulissement le long desquels le rideau 10 se déplace, sans frottement excessif, par l'intermédiaire de glisseurs 21 et 31 qui assurent la connexion physique entre ledit rideau et lesdites tringles.

La figure 4 représente ces glisseurs 21 et 31 isolés. Ils sont répartis en glisseurs supérieurs 21 et glisseurs inférieurs 31 selon qu'ils relient le rideau 10 à la tringle supérieure 20 ou inférieure 30.

Les glisseurs supérieurs 21 sont reliés par une cordelette 22. De même, les glisseurs inférieurs 31 sont reliés par une cordelette 32.

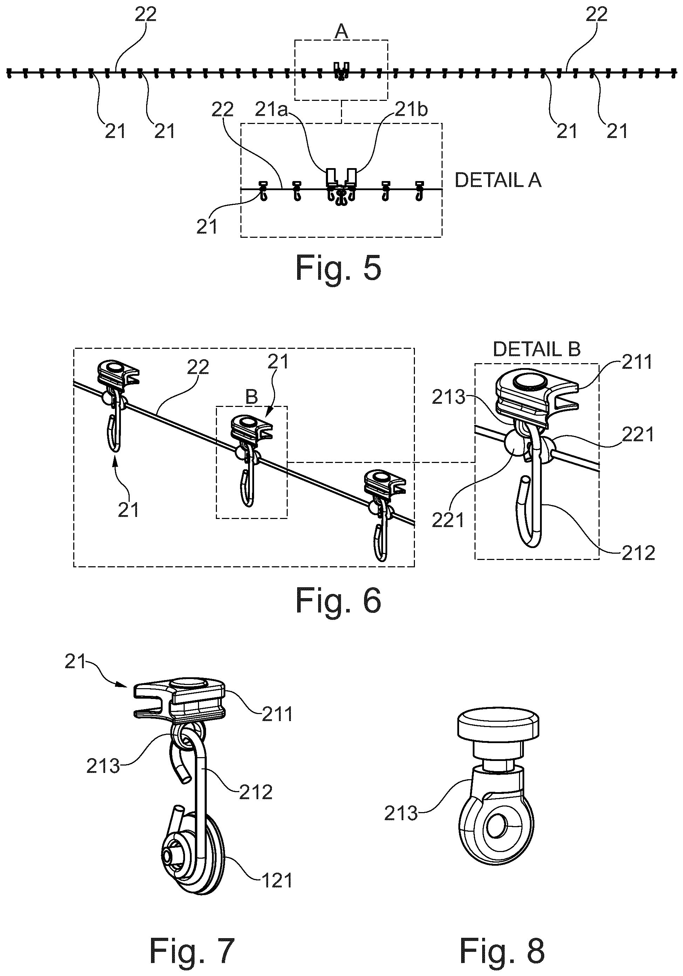

La figure 5 représente la ligne des glisseurs supérieurs 21 reliés par la cordelette 22, lesdits glisseurs comprennent deux glisseurs supérieurs d'entrainement 21a et 21b.

Les glisseurs supérieurs 21 sont régulièrement espacés et distribués en deux groupes : un premier groupe et un deuxième groupe destinés à accrocher respectivement la première partie 10a et la deuxième partie 10b du rideau 10 (non représenté sur la figure 5).

Le premier glisseur supérieur d'entrainement 21a est situé à l'extrémité du premier groupe, afin d'accrocher la première partie 10a du rideau 10 par le coin situé entre son côté supérieur 12 et son côté latéral distal 15a.

De même, le deuxième glisseur supérieur d'entrainement 21b est situé à l'extrémité du deuxième groupe, afin d'accrocher la deuxième partie 10b du rideau 10 par le coin situé entre son côté supérieur 12 et son côté latéral distal 15b.

La figure 6 représente la structure de base des glisseurs supérieurs 21. Chaque glisseur 21 comporte un patin 211 pourvu d'une fente périphérique coopérant avec le rail de la tringle supérieure 20 et assurant le glissement dudit glisseur, un crochet 212 pour accrocher le rideau 10 par exemple via des œillets ménagés sur son côté supérieur, et un anneau 213 fixé au patin 211 et supportant le crochet 212.

La cordelette 22 traverse les crochets 212 des glisseurs 21 et comporte des paires de stoppeurs 221 placés de part et d'autre de chaque crochet 212 pour faciliter le pliage de la cordelette et maintenir un pas régulier entre les ondulations du rideau 10.

En effet, chaque paire de stoppeurs bloque le glisseur qui lui est associé sur la cordelette et, en raison de l'espacement régulier entre ces paires de stoppeurs, la longueur de cordelette entre deux glisseurs successifs reste toujours la même, que la cordelette soit tendue ou lâche. Cela garantit donc une régularité des ondulations du rideau en toute position.

La figure 7 représente un exemple de réalisation dans lequel le glisseur supérieur 21 est accroché au rideau (non représenté) au moyen d'un bouton 121 qui se fixe sur ledit rideau. En effet, le bouton 121 comporte une zone annulaire qui s'insère dans la boucle inférieure du crochet 212. La boucle supérieure du crochet 212 est quant à elle insérée dans l'anneau 213 et peut y pivoter librement, ce qui facilite le mouvement du rideau plus globalement. L'anneau 213 présente une structure adaptée pour qu'il soit monté rotatif dans le patin 211, toujours dans l'objectif de fluidifier le mouvement global du rideau.

La figure 8 illustre précisément la forme de l'anneau 213.

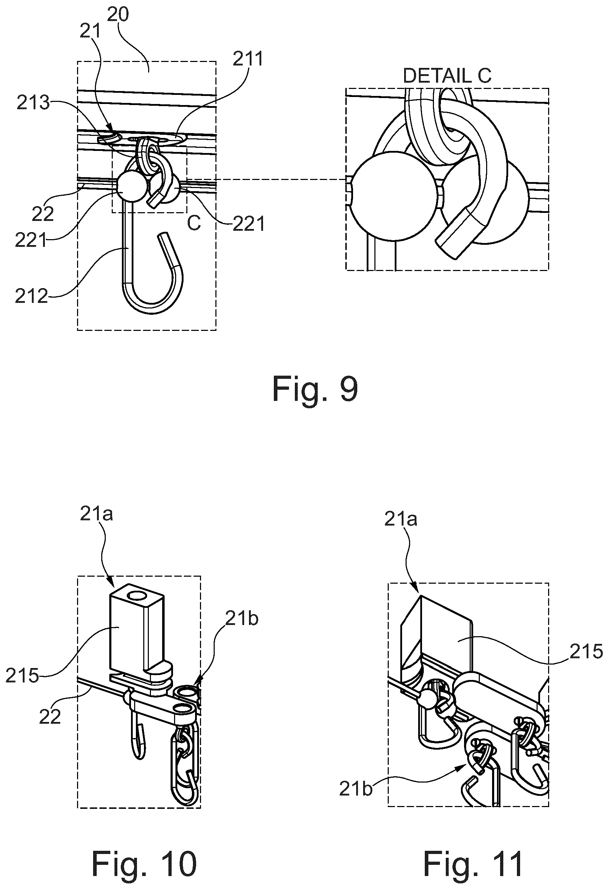

La figure 9 représente un glisseur supérieur 21 en place dans le rail de la tringle supérieure 20.

Le détail C montre le positionnement des stoppeurs 221 par rapport au crochet 212. Ce positionnement ainsi que leur forme en boulle permettent aux stoppeurs 221 de limiter angulairement la rotation du crochet 212 pour ainsi éviter une rotation complète qui provoquerait un entrelacement de la cordelette 22 par exemple. Cela permet d'assurer un mouvement fluide de tous les glisseurs 21, et donc du rideau 10, entrainés par les glisseurs supérieurs d'entrainement 21a et 21b.

Les figures 10 et 11 représentent le premier glisseur supérieur d'entrainement 21a, ainsi qu'une partie du deuxième glisseur supérieur d'entrainement 21b, les deux glisseurs d'entrainement se rejoignant lorsque le rideau est fermé.

À la différence des autres glisseurs supérieurs 21, les glisseurs supérieurs d'entrainement 21a et 21b comportent une structure usinée 215 en prolongement du patin 211 pour être couplés au système d'entrainement motorisé 50.

En référence aux figures 2a à 3b, le système d'entrainement motorisée 50 est placé latéralement à l'arrière du séparateur 100 et comprend principalement un moteur, un arbre mécanique avec un système de renvoi par poulie et courroie à la fois en partie haute et en partie basse du rideau 10. Les courroies sont renforcées et coopèrent avec un tendeur de courroie.

Le mouvement de rotation du moteur d'entrainement est transmis de façon synchronisée aux glisseurs d'entrainement 21a, 21b, 31a et 31b, ces derniers entrainent ensuite tous les autres glisseurs 21 et 31 les uns après les autres.

La vitesse de rotation du moteur est réglée pour que le coulissement du rideau se passe doucement. La fermeture et l'ouverture du rideau 10 est actionnée automatiquement par un simple bouton, « tout ou rien » ou progressif. Avantageusement, l'entrainement synchronisé entre le haut et le bas permet à la partie basse du rideau 10 de bien suivre le mouvement pour éviter des problèmes lors du stockage du rideau.

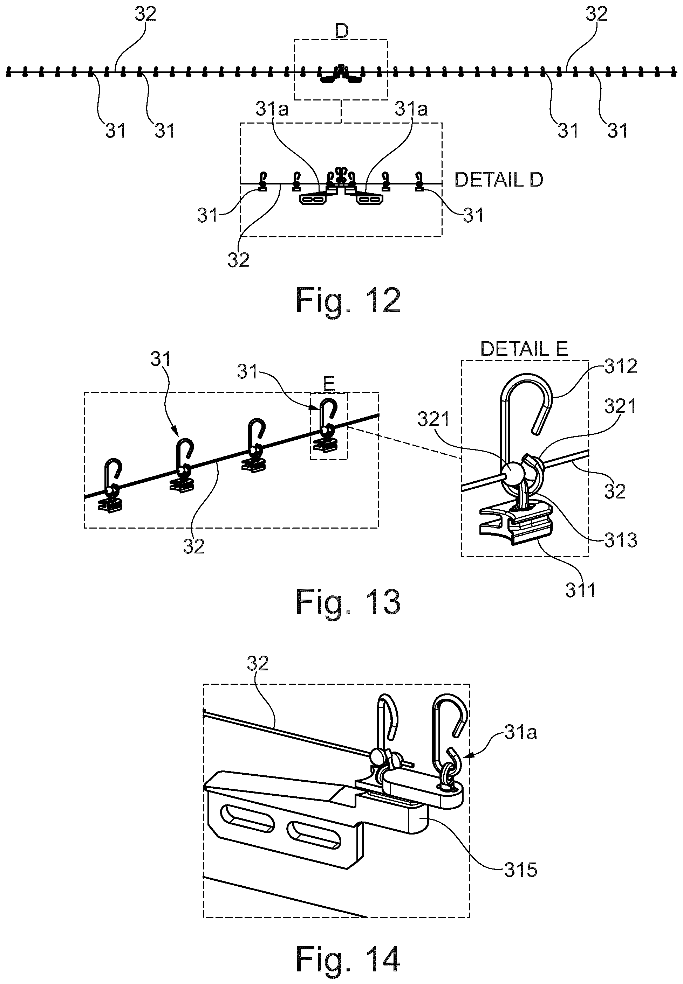

La figure 12 représente la ligne des glisseurs inférieurs 31 reliés par la cordelette 32, lesdits glisseurs comprennent deux glisseurs inférieurs d'entrainement 31a et 31b.

Les glisseurs inférieurs 31 sont régulièrement espacés et distribués en deux groupes : un premier groupe et un deuxième groupe destinés à accrocher respectivement la première partie 10a et la deuxième partie 10b du rideau 10 (non représenté sur la figure 12).

Le premier glisseur inférieur d'entrainement 31a est situé à l'extrémité du premier groupe, afin d'accrocher la première partie 10a du rideau 10 par le coin situé entre son côté inférieur 13 et son côté latéral distal 15a.

De même, le deuxième glisseur inférieur d'entrainement 31b est situé à l'extrémité du deuxième groupe, afin d'accrocher la deuxième partie 10b du rideau 10 par le coin situé entre son côté inférieur 13 et son côté latéral distal 15b.

Ainsi, les glisseurs inférieurs d'entrainement 31a et 31b sont situés en regard des glisseurs supérieurs d'entrainement 21a et 21b respectivement.

La figure 13 représente la structure de base des glisseurs inférieurs 31. Cette structure est identique à celle des glisseurs supérieurs 21 précédemment décrite.

En effet, chaque glisseur 31 comporte un patin 311 pourvu d'une fente périphérique coopérant avec le rail de la tringle inférieure 30 et assurant le glissement dudit glisseur, un crochet 312 pour accrocher le rideau 10, et un anneau 313 fixé au patin 311 et supportant le crochet 312.

La cordelette 32 traverse les crochets 312 des glisseurs 31 et comporte des paires de stoppeurs 321 placés de part et d'autre de chaque crochet 312 pour faciliter le pliage de la cordelette et maintenir un pas régulier entre les ondulations du rideau 10.

La figure 14 représente le premier glisseur inférieur d'entrainement 31a qui, à la différence des autres glisseurs inférieurs 31, comporte une structure usinée 315 en prolongement du patin 311 pour être couplé au système d'entrainement motorisé de la même façon que les glisseurs supérieurs d'entrainement. Le deuxième glisseur d'entrainement 31b est bien entendu identique au premier, mais disposé dans un sens opposé comme représenté sur le détail D de la figure 12.

Pour des raisons de sécurité en cas de décompression rapide, la tringle inférieure 30, notamment les glisseurs inférieurs 31, est configurée pour permettre un détachement rapide du rideau 10 par le bas.

Si le rideau ne se décroche pas facilement en bas en cas de décompression rapide, il risque d'entrainer les parties mécaniques et ainsi blesser le passager.

Le décrochage du rideau 10 par le bas est réglé par la valeur maximale de la charge supportée par chaque crochet 312. Cette valeur est par exemple de 63N. Au-delà de ce niveau de charge en traction le crochet 312 libère le rideau 10.

En contrepartie, la partie haute du rideau 10 est fixée sur la tringle supérieure 20 avec des charges de décrochage au niveau des crochets 212 plus élevées pour que le rideau ne se détache que par le bas.

Le séparateur 100 ainsi décrit est donc conçu pour séparer efficacement les espaces entre les suites passagers adjacentes en première classe. Ce séparateur est de pleine hauteur, couvrant toute la hauteur utile de la cabine, assurant ainsi une séparation complète entre les suites adjacentes. Il est équipé d'un rideau motorisé qui peut être ouvert ou fermé automatiquement, offrant ainsi une flexibilité d'utilisation et un contrôle facile pour les passagers. Le rideau est conçu avec des ondulations régulières pour un aspect esthétique agréable et fabriqué dans un matériau textile opacifiant pour assurer l'intimité visuelle entre les suites. De plus, le système de stockage du rideau lorsqu'il est ouvert est optimisé pour minimiser l'encombrement, améliorant ainsi l'espace disponible dans la cabine. Enfin, des mesures de sécurité sont intégrées pour permettre un détachement rapide du rideau en cas de décompression, assurant la sécurité des passagers. En somme, la présente invention offre une solution sophistiquée pour améliorer le confort, la confidentialité et la sécurité des passagers en première classe.

## Revendications

1. Séparateur (100) de cabine d'avion (200), séparant deux zones passagers privatives (210, 220) adjacentes dans une même classe, comportant un rideau (10) suspendu par son côté supérieur (12) à une tringle supérieure (20), ledit séparateur présentant une position ouverte et une position fermée, et **caractérisé en ce qu'**il est de pleine hauteur, couvrant ainsi une hauteur jusqu'au plafond de la cabine d'avion dans laquelle il est installé, et **en ce qu'**il est accroché par son côté inférieur (13) à une tringle inférieure (30) opposée à la tringle supérieure.

2. Séparateur selon la revendication 1, dans lequel le rideau (10) comporte une première partie (10a) et une deuxième partie (10b) séparées, lesdites parties étant configurées pour que leurs mouvements soient synchronisés et se rejoignant au niveau d'une ligne de fermeture (L) centrale lorsque ledit séparateur est en position fermée.

3. Séparateur selon la revendication 1 ou 2, dans lequel chaque tringle (20, 30) comporte un rail de coulissement et des glisseurs (21, 31) reliant physiquement le rideau (10) au rail de coulissement, chaque glisseur comportant un patin (211, 311) de glissement sur le rail et un crochet (212, 312) pour accrocher le rideau (10).

4. Séparateur selon la revendication 3, dans lequel les glisseurs (21, 31) de chaque tringle (20, 30) sont reliés par une cordelette (22, 32) comportant des stoppeurs (221, 321) placés à intervalles réguliers, pour maintenir des ondulations (11) régulières du rideau (10).

5. Séparateur selon l'une quelconque des revendications précédentes, comportant en outre un système d'entrainement motorisé (50) pour actionner automatiquement les mouvements d'ouverture et de fermeture dudit séparateur, ledit système étant couplé de façon synchronisée à la fois à une partie haute et à une partie basse du rideau (10).

6. Séparateur selon la revendication 5, dans lequel au moins un côté latéral proximal (14a, 14b) du rideau (10) est couplé au système d'entrainement motorisé (50) au moyen de deux organes de liaison (55) : un en partie haute et l'autre en partie basse.

7. Séparateur selon l'une quelconque des revendications précédentes, dans lequel la tringle inférieure (30) est configurée pour permettre au rideau (10) de se détacher par le bas en cas de décompression rapide, lorsque ledit séparateur est en position fermée dans une cabine d'avion (200).

8. Séparateur selon la revendication 7, dans lequel la tringle inférieure (30) comporte des glisseurs inférieurs (31) pour attacher le côté inférieur (13) du rideau (10), chaque glisseur inférieur comportant un crochet (312) qui se détache du rideau (10) au-delà d'une charge de traction maximale donnée, afin de libérer le rideau en cas de décompression rapide de la cabine.

9. Séparateur selon l'une quelconque des revendications précédentes, dans lequel le rideau (10) est totalement dissimulé dans un espace de stockage réduit (V) lorsque ledit séparateur est en position ouverte.

10. Cabine d'avion (200) comprenant deux suites privatives adjacentes (210, 220), et **caractérisée en ce qu'**elle comporte un séparateur (100) selon l'une des revendications précédentes placé entre lesdites suites.
